# EUROPÄISCHE PATENTSCHRIFT

(11) **EP 3 182 569 B1**
(45) Veröffentlichungstag und Bekanntmachung des Hinweises auf die Patenterteilung: **02.12.2020**
(21) Anmeldenummer: 15201154.0
(22) Anmeldetag: 18.12.2015
(51) Int. Cl.: H02K 15/06

(54) **VORRICHTUNG UND VERFAHREN ZUM EINBRINGEN EINER WELLENWICKLUNG AUS EINER VORGEFERTIGTEN WELLENWICKLUNGSMATTE IN STATORBLECHPAKETNUTEN**
DEVICE AND METHOD FOR INSERTING A WAVE WINDING FROM A PREFABRICATED WAVE WINDING MAT INTO SLOTS OF A STACKED STATOR CORE
DISPOSITIF ET PROCEDE D'INTRODUCTION D'UNE ENROULEMENT ONDULÉ D'UNE NATTE DES ENROULEMENTS ONDULÉS PREFABRIQUÉS DANS LES ENCOCHES D'UN EMPILAGE DE TÔLES DE STATOR

(43) Veröffentlichungstag der Anmeldung: 21.06.2017
(73) Patentinhaber: Aumann Espelkamp GmbH, 32339 Espelkamp (DE)
(72) Erfinder: LÜTTGE, Wolfgang, 31787 Hameln (DE)
(74) Vertreter: Bittner, Thomas L.

(56) Entgegenhaltungen:
- EP-A1- 1 469 579
- WO-A1-2015/186835
- FR-A1- 2 896 351
- US-A1- 2004 261 256

## Beschreibung

Die Erfindung betrifft eine Vorrichtung zum Einbringen einer Drahtwellenwicklungen aufweisenden Wicklungsmatte in ein Statorblechpaket und ein Verfahren zum Herstellen eines Stators.

Drahtwellenwicklungen sind Wicklungen, meistens aus einem oder mehreren Drähten, insbesondere aber nicht ausschließlich aus Flachdrähten bzw. Profildrähten, welche eine charakteristische Wellenform aufweisen. Drähte sind im Sinne der vorliegenden Anmeldung strangförmige, wickelbare Erzeugnisse, die zum Leiten des elektrischen Stromes geeignet sind, insbesondere solche aus Metall oder Metalllegierungen. Hergestellt werden diese durch abwechselndes Wickeln des Drahtes um ein Wickelschwert Biegen des Drahtes. Es entstehen durch diesen Prozess Drahtmatten oder auch Wicklungsmatten, welche anschließend an einem Rotor- oder Statorkörper, insbesondere einem Rotor- oder Statorblechpaket, angebracht werden müssen. Dabei müssen eine definierte Anzahl von Windungen in jeweils eine Nut im Rotor- oder Statorkörper platziert werden. Nach dem Stand der Technik ist dies kaum automatisierbar. Bekannt ist, die Wickelmatte um eine radial expandierbare Einbringvorrichtung zu wickeln, diese dann im Ring des Rotor- oder Statorkörpers zu platzieren und die ringförmig angeordnete Wickelmatte durch Radialexpansion in die innen liegenden Nuten des Rotor- oder Statorkörpers hineinzudrücken.

Nicht alle Wicklungsformen eines Rotors oder Stators lassen sich mit der Drahtwellenwicklung realisieren. So offenbart beispielsweise WO 2015/186835 A1 (EP 3 109 981 A1) eine Wicklung aus einer Vielzahl von (Teil-)Spulen, die vorab zu einem Ring zusammengefügt werden und das gesamte Ringensemble gleichzeitig in die Nuten des Rotors oder Stators eingeschoben werden, um Spannungen zu vermeiden. Eine derartige Wickelform kann mit einer Drahtwellenwicklung nicht realisiert werden.

Die FR 2 896 351 A1 offenbart ein Wellenwickelverfahren, bei dem die Matten auf einem Stab mit äquidistanten Querrillen gewickelt werden. Die Matten werden tangential an einen Transferring geführt und diesem übergeben. Dieser gefüllte Transferring wird in einen Rotor- oder Statorkörper eingebracht und justiert. Anschließend werden die Windungen der Matte gleichzeitig in die Nuten des Rotor- oder Statorkörpers geschoben. Bei dem in der EP 1 469 579 A1 offenbarten Verfahren wird die Matte auf einen gerillten Transferring aufgewickelt, in den Statorkörper eingebracht, justiert und gleichzeitig alle Wicklungen in die Nuten des Statorkörpers geschoben.

Bei der US 2004/0261256 A1 wird die Wickelmatte ebenfalls auf einem quergerillten Stab gewickelt, der tangential einem Transferring mit Nuten übergeben wird. Der gefüllte Transferring wird in den Rotor- oder Statorkörper eingebracht und justiert. Schieber, die innen in den Nuten des Transferrings angebracht sind, schieben die Wicklungen gleichzeitig in die Nuten des Rotor- oder Statorkörpers.

Dazu muss gewährleistet sein, dass die Expansion gleichmäßig erfolgt, was aufgrund der Tatsache, dass ein radialer Druck auf eine Windung innerhalb der aus vielen zusammenhängenden Windungen bestehenden Wicklungsmatte nicht nur zu einer Ausweichbewegung der entsprechenden Windung, sondern auch zu einer Verschiebung der Windungen der gesamten Wicklungsmatte führen kann. Die geschildete Vorgehensweise erfordert also eine hohe Präzision und entsprechende Einbringvorrichtungen, wie Wickelstäbe und Transferringe, sind im Grunde für jede Länge von Wicklungsmatten neu zu konstruieren.

Aufgabe der vorliegenden Erfindung ist es, eine Vorrichtung zum Einbringen einer Drahtwellenwicklungen aufweisenden Wicklungsmatte in einen Rotor- oder Statorkörper und ein entsprechendes Verfahren zum Herstellen eines Rotors- oder Stators anzugeben, mit denen das Einbringen von Wicklungsmatten in die Nuten unabhängig von der Länge der Wicklungsmatten und auch zuverlässig und präzise durchgeführt werden kann.

Gelöst wird diese Aufgabe durch eine Vorrichtung zum Einbringen einer Drahtwellenwicklungen aufweisenden Wicklungsmatte in einen Rotor- oder Statorkörper mit den Merkmalen des Anspruchs 1 und ein Verfahren zum Herstellen eines Rotors oder Stators mit den Merkmalen des Anspruchs 12. Vorteilhafte Ausführungsformen finden sich in den jeweils abhängigen Ansprüchen.

Die erfindungsgemäße Vorrichtung zum Einbringen einer Drahtwellenwicklungen aufweisenden Wicklungsmatte in einen Rotor- oder Statorkörper umfasst eine Aufnahmeeinrichtung zum Aufnehmen und Halten des Rotor- oder Statorkörpers in einer Befestigungslage, und eine Zuführeinrichtung, die die Wicklungsmatte der Aufnahmeeinrichtung zuführt. Von der Aufnahmeeinrichtung umfasst ist weiter eine Einbringeinrichtung, die dazu ausgelegt ist, Windungen oder Windungsgruppen der Wicklungsmatte zu vereinzeln und Windungen oder Windungsgruppen bezogen auf den Rotor- oder Statorkörper in einer Nuttiefenrichtung in Nuten des Rotor- oder Statorkörpers Nut für Nut nacheinander einzubringen durch eine Relativdrehung zwischen Rotor- oder Statorkörper und Einbringeinrichtung. Die Nuttiefenrichtung ist die Richtung, in der sich die Nut in den Rotor- oder Statorkörper hinein erstreckt. Das kann die Radialrichtung sein, es können aber auch in einem Winkel zur Radialrichtung angeordnete Nuten im Rotor- oder Statorkörper vorgesehen sein. Dann beschreibt die Nuttiefenrichtung die Richtung, die unter dem genannten Winkel zur Radialrichtung verläuft.

Erfindungsgemäß kann der Rotor- oder Statorkörper als Rotor- oder Statorblechpaket ausgebildet sein, dies ist aber nicht zwingend erforderlich. Es können auch Rotor- oder Statorkörper aus nicht paketierten Materialien, z.B. aus gesinterten Materialien eingesetzt werden.

Gemäß dem erfindungsgemäßen Verfahren kann - insbesondere unter Verwendung der oben und auch nachfolgend beschriebenen erfindungsgemäßen Vorrichtung - dies wie folgt geschehen:

Es wird zunächst ein Rotor- oder Statorkörper mit auf dessen Innen- oder Außenseite als Vertiefungen ausgebildeten Nuten bereitgestellt. Die Nuten weisen eine nicht notwendigerweise in Radialrichtung verlaufende, Nuttiefenrichtung und einer Nutlängsrichtung auf. Folgende Schritte werden ausgeführt:
- Heranführen einer Wellenwicklungsmatte zur mit Nuten versehenden Seite des Rotor- oder Statorkörpers;
- sukzessives Einbringen von Windungen, indem
   a. eine Windung oder eine Mehrzahl Windungen vereinzelt werden und
   b. anschließend die Windung oder die Mehrzahl Windungen in eine Nut über eine Einbringeinrichtung eingebracht werden,
   c. nach Einbringen der Windung(en) in eine Nut (eine Relativdrehung zwischen Rotor- oder Statorkörper und Einbringeinrichtung erfolgt
   d. die Schritte a., b. und c. wiederholt ausgeführt werden.

Die Wellenwicklungsmatte ist aus einem Draht gebildet, welcher bevorzugt ein Flach- oder Profildraht ist.

Die mit Windungen befüllten Nuten können abschließend mit Deckschiebern verschlossen werden, dazu kann die erfindungsgemäße Vorrichtung eine Deckschiebereinbringeinrichtung aufweisen, die dazu ausgelegt ist, eine mit Windungen befüllte Nut (mit einem Deckschieber in axialer Richtung der Nut bzw. Nutlängsrichtung zu schließen.

Durch das sukzessive Einbringen der Wicklungen Nut für Nut kann der Prozess mit hoher Präzision ausgeführt werden und die Gefahr, eine Nut nicht zu treffen, wird gesenkt. Weiter funktioniert die Erfindung gleichermaßen für außen und innen liegende Nuten im Statorblechpaket und ist unabhängig von der Länge der einzubringenden Wicklungsmatte.

Bevorzugt ist vorgesehen, dass die Aufnahmeeinrichtung drehbar ausgelegt ist, so dass sie den Rotor- oder Statorkörper in einer Drehrichtung um die Längsachse des Rotor- oder Statorkörpers drehen kann. Natürlich ist lediglich wichtig, dass eine Relativdrehung zwischen Rotor- oder Statorkörpers und Einbringeinrichtung erfolgt. Folglich kann auch die Aufnahmeeinrichtung fest und die Einbringeinrichtung relativ dazu drehbar gelagert sein. Zur Drehung des Rotor- oder Statorkörpers kann insbesondere Servomotor vorgesehen sein.

Die Einbringeinrichtung weist nach einer bevorzugten Ausführungsform der Erfindung eine Vereinzelungseinrichtung auf, welche in einer Zustellrichtung zum Rotor- oder Statorkörper hin zustellbar ist. Die Zustellrichtung verläuft dabei insbesondere in einem von 0° verschiedenen Winkel zur Nuttiefenrichtung. Auf diese Weise greift die Vereinzelungseinrichtung immer schräg zur Einbringrichtung der Windungen an, was die Vereinzelung nach Art eines Abschälvorgangs erleichtert.

Weiter kann die Einbringeinrichtung einen Nuttiefenschieber, insbesondere einen Radialschieber aufweisen. Dieser Schieber ist in Nuttiefenrichtung dem Rotor- oder Statorkörper zustellbar ausgebildet. So kann er die vereinzelten Windungen durch Vorschub in Nuttiefenrichtung in eine Nut des Rotor- oder Statorkörpers hinein schieben.

Zur Erleichterung des Einbringens einzelner Windungen oder Windungsgruppen kann insbesondere vorgesehen sein, dass die Einbringeinrichtung eine über den seitlichen Rändern der mit Windungen zu befüllenden Nut des Rotor- oder Statorkörpers positionierbare Führungseinrichtung aufweist.

Besonders vorteilhaft ist, wenn die Führungseinrichtung zwei seitlich der zu befüllenden Nut zu positionierende Führungsbleche umfasst. An diesen Führungsblechen können die Windungen entlang in die zu befüllende Nut gleiten. Insbesondere können die Führungsbleche, die bevorzugt aus Federstahl, einem anderen Metall oder aus Kunststoff bestehen können, dabei so positioniert werden, dass ein Kontakt mit scharfkantigen Nuträndern und damit eine Beschädigung einzelner Abschnitte der Wickelmatte vermieden wird.

Weiter kann nach einer Ausführungsform alternativ oder ergänzend hierzu die Einbringeinrichtung eine Positionierungseinrichtung aufweisen. Diese ist dazu ausgelegt, die Einbringeinrichtung über einer zu befüllenden Nut des Rotor- oder Statorkörpers zu positionieren. Auf diese Weise befindet sich dann die Einbringeinrichtung immer an einer Stelle, an welcher eine vereinzelte Windung oder Windungsgruppe sich unmittelbar über der zu befüllenden Nut befindet. Vorteilhafterweise kann die Positionierung ein weiterer Schieber sein, der in eine nicht zu befüllende Nut, bevorzugt in eine der zu befüllenden Nut benachbarte, in der Befüllreihenfolge später zu befüllende Nut eintauchen und die Einbringeinrichtung so relativ zum Rotor- oder Statorkörper positionieren. So kann die Befüllung der jeweiligen Nut im Rotor- oder Statorkörper effektiv und sicher durchgeführt werden.

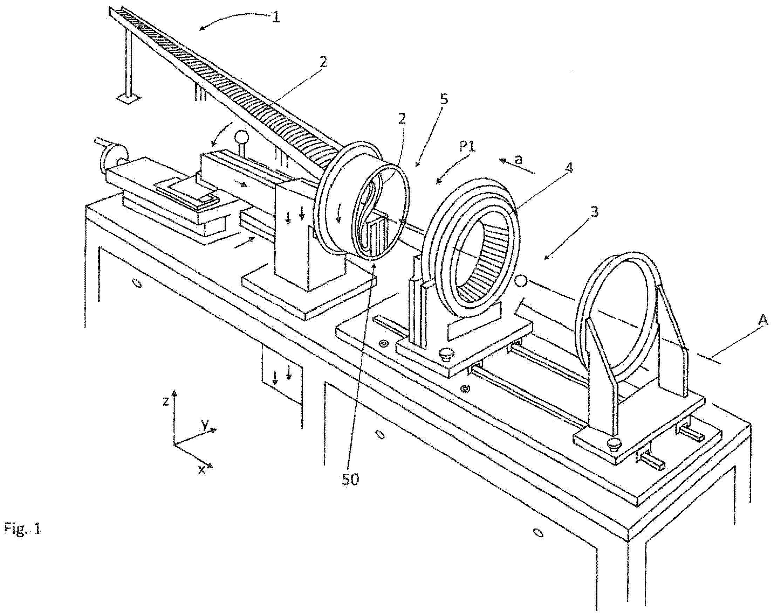

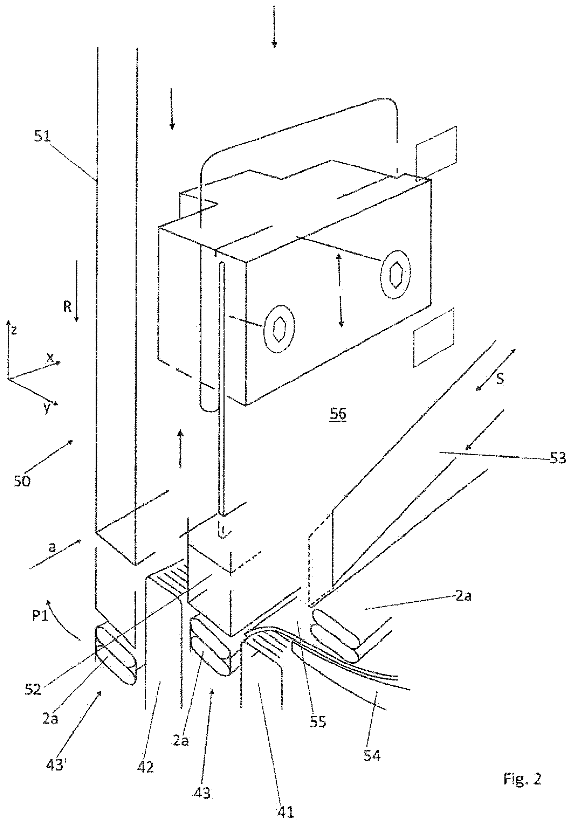

Die Erfindung wird nachfolgend anhand der Figuren 1 und 2 näher erläutert.
- Figur 1 -: zeigt dabei eine beispielhafte erfindungsgemäße Vorrichtung in Perspektivischer Darstellung.
- Figur 2 -: zeigt eine Ansicht auf einen Rotor- oder Statorkörper im Bereich der Einbringeinrichtung.

Bei der in der Figur 1 gezeigten Vorrichtung ist eine Zuführeinrichtung 1 vorgesehen, über die eine Wicklungsmatte (im Folgenden auch Matte) 2 dem Rotor- oder Statorkörper 4 zugeführt wird. In der gezeigten Darstellung ist eine Aufnahmeeinrichtung 5 gezeigt, auf die der Rotor- oder Statorkörper 4 aufgenommen (insbesondere hier durch die Transfereinrichtung 3) aufgeschoben und an der Aufnahmeeinrichtung 5 fixiert werden kann. Nach Fixierung an der Aufnahmeeinrichtung 5 kann der, insbesondere ring- oder scheibenförmige, Rotor- oder Statorkörper um die Maschinenachse A in einer Drehrichtung P1 gedreht werden. Dies geschieht bevorzugt über einen nicht im Detail dargestellten Drehantrieb, insbesondere einen Servomotor.

An der Aufnahmeeinrichtung 5 ist die Einbringeinrichtung 50 angeordnet, sie kann auch separat dazu angeordnet sein. Im gezeigten Beispiel ist ein innen genuteter Rotor- oder Statorkörper 4 (hier insbesondere als Statorkörper gezeigt) dargestellt, die Vorrichtung und vor allem das erfindungsgemäße Verfahren kann aber auch mit außen genuteten Rotor- oder Statorkörpern durchgeführt werden. In diesem Fall würde die Einbringeinrichtung 50 nicht am inneren Rand des Rotor- oder Statorkörpers 4 vorgesehen werden (wie gezeigt), sondern am entsprechend äußeren Rand. Die Richtung a markiert die Nutlängsrichtung der Nuten, welche bevorzugt parallel zur Richtung X der Maschinenachse A verläuft aber nicht muss.

Der in Figur 2 schematisch verdeutlichte Einbringvorgang zum Einbringen von Windungen 2a der Matte 2 gilt folglich für Rotor- oder Statorkörper 4 mit innen wie mit außen liegenden Nuten 43. Die Nuten 43 des Rotor- oder Statorkörpers 4 sind zwischen Nutwänden 41, 42 ausgebildet. Zwischen zwei benachbarten Wänden 41, 42 erstreckt sich eine Nut 43 in Nuttiefenrichtung R, bei welcher es sich um die Radialrichtung des Rotor- oder Statorkörpers handeln kann aber nicht muss, und in Nutlängsrichtung a, welche bevorzugt parallel zur Richtung X der Maschinenachse verläuft. Der Rotor- oder Statorkörper kann im gezeigten Beispiel in Richtung P1 um die Maschinenachse A gedreht werden.

Im gezeigten Beispiel weist die Matte 2 zwei übereinander liegende Windungen 2a auf, es können aber auch mehr oder weniger Windungen 2a sein, insbesondere kann die Matte auch lediglich aus einer Lage Windungen bestehen. Hier wird das Einbringen der Windungen 2a mittels der Einbringeinrichtung 50 beispielhaft dargestellt. Dargestellt ist der Einbringvorgang zu einem Zeitpunkt, zu dem zwei Windungen in die Nut 43 eingebracht werden. In der in Pfeilrichtung P1 vorauslaufenden Nut 43' sind bereits Windungen 2a eingebracht.

Die Einbringeinrichtung 50 separiert zunächst über eine Vereinzelungseinrichtung 53 die gerade einzubringende Windung oder Windungsgruppe 2a von den übrigen, noch nicht eingebrachten Windungen 2a der Matte. Dazu ist die Vereinzelungseinrichtung 53 bevorzugt in Richtung des Rotor- oder Statorkörpers 4 zustellbar ausgebildet, hier im gezeigten Beispiel als Schieber mit einer zur Nuttiefenrichtung R in einem Winkel verlaufenden Schieberichtung S. Durch Heranfahren des Schiebers in Richtung S an den Rotor- oder Statorkörper werden die noch nicht einzubringenden Windungen 2a zurückgehalten, so dass sie nicht über die zu befüllende Nut 43 gelangen können. Nur die Windungen, die in die Nut 43 einzubringen liegen zu diesem Zeitpunkt über der Nutöffnung. Damit sie in die Nut 43 in Nuttiefenrichtung R eingebracht werden können, weist die Einbringeinrichtung 50 einen (auch) in Nuttiefenrichtung R bewegliches Element, insbesondere Nuttiefenschieber 52, auf, der nach dem Vereinzelungsvorgang die Einzubringende Windung 2a in die Nut 43 hinein drückt. Dieser Vorgang wird wiederholt, bis alle Windungen der Matte in Nuten eingebracht sind.

Zur Erleichterung des Einbringens können alternativ oder einander ergänzend zwei Hilfen vorgesehen sein.

Zum einen kann das Einführen der vereinzelten Windungen 2a mit Führungselementen 54, 55, 56 erleichtert werden. Die Führungselemente sind in der Regel Führungsbleche 55 und 56, die im Bereich der Nutränder platziert werden, damit die Windungen 2a beim Hineingleiten in die Nut 43 nicht an den scharfkantigen Rändern 41, 42 beschädigt werden. Bevorzugt ist ein in Nuttiefenrichtung zustellbares Führungsblech 56 und weiter ein schräg oder gebogen verlaufendes weiteres Führungsblech 55 vorgesehen, welches sich an einem an der Einbringeinrichtung 50 angeordneten Keilelement 54 abstützt, so dass eine Art Trichterzuführung entsteht, bei der die Windung über das Blech 55 gleitet und auf das Blech 56 trifft, so dass die Windung 2a genau in die zu befüllende Nut 43 geführt wird, wo sie anschließend durch das Element, einem Nuttiefenschieber 52, in die Nut 43 gedrückt werden kann.

Als zweite angesprochene Hilfe kann eine Positionierungseinrichtung 51 vorgesehen sein. Diese hat den Zweck, die Einbringeinrichtung 50, insbesondere den Nuttiefenschieber 52 exakt über der zu befüllenden Nut 43 zu positionieren. Dies kann z.B. so geschehen, dass die Positionierungseinrichtung 51 als an der Einbringeinrichtung 50 angeordneter weiterer Nuttiefenschieber vorgesehen ist, welcher in eine der zu befüllenden Nut, bevorzugt vorauslaufenden Nut 43' eingreift und so eine definierte Lage der Einbringeinrichtung 50 sicherstellt, bevor der Vereinzelungsvorgang und das Einbringen der Windung 2a in die Nut 43 erfolgt.

Die beschriebene Vorrichtung und das beschriebene Verfahren sind in der Lage, das Einbringen von Wicklungsmatten 2 in Rotor- oder Statorkörper 4 zu vereinfachen und zu automatisieren.

## Patentansprüche

1. Vorrichtung zum Einbringen einer Drahtwellenwicklungen aufweisenden Wicklungsmatte (2) in einen Rotor- oder Statorkörper (4), aufweisend eine Aufnahmeeinrichtung (5) zum Aufnehmen und Halten des Rotor- oder Statorkörpers (4) in einer Befestigungslage, und eine Zuführeinrichtung (1), die die Wicklungsmatte (2) der Aufnahmeeinrichtung (5) zuführt, wobei die Aufnahmeeinrichtung (5) weiter eine Einbringeinrichtung (50) aufweist, die dazu ausgelegt ist, Windungen (2a) der Wicklungsmatte (2) bezogen auf den Rotor- oder Statorkörper (4) in einer Nuttiefenrichtung (R) in Nuten (43) des Rotor- oder Statorkörpers (4) einzubringen, **dadurch gekennzeichnet, dass** die Einbringeinrichtung (50) weiterhin dazu ausgelegt ist, die Windungen (2a) der Wickelmatte (2) vor dem Einbringen in Nuten (43) zu vereinzeln und dass eine Relativdrehung zwischen Rotor- oder Statorkörper (4) und Einbringeinrichtung (50) erfolgt.

2. Vorrichtung nach Anspruch 1,
**dadurch gekennzeichnet,**
**dass** die Aufnahmeeinrichtung (5) drehbar ausgelegt ist, so dass sie den Rotor- oder Statorkörper (4) in einer Drehrichtung (P1) um die Längsachse des Rotor- oder Statorkörpers (4) drehen kann.

3. Vorrichtung nach Anspruch 2,
**dadurch gekennzeichnet,**
**dass** die Aufnahmeeinrichtung (5) zur Drehung des Rotor- oder Statorkörpers (4) einen Servomotor aufweist.

4. Vorrichtung nach einem der vorigen Ansprüche,
**dadurch gekennzeichnet,**
**dass** die Einbringeinrichtung (50) einen in zum Statorblechpaket (4) in einer, insbesondere in einem von 0° verschiedenen Winkel zur Nuttiefenrichtung (R) verlaufenden, Schieberichtung (S) zustellbaren Vereinzelungseinrichtung (53) aufweist.

5. Vorrichtung nach einem der vorigen Ansprüche,
**dadurch gekennzeichnet,**
**dass** die Einbringeinrichtung (50) einen Nuttiefenschieber (52), insbesondere Radialschieber, aufweist, der in Nuttiefenrichtung (R) dem Rotor- oder Statorkörper (4) zustellbar und dazu ausgelegt ist, die vereinzelten Windungen (2a) durch Vorschub in Nuttiefenrichtung (R) in eine Nut (43) des Rotor- oder Statorkörpers (4) zu schieben.

6. Vorrichtung nach einem der vorigen Ansprüche,
**dadurch gekennzeichnet,**
**dass** die Einbringeinrichtung (50) eine über den seitlichen Rändern (42) der mit Windungen zu befüllenden Nut (43) des Rotor- oder Statorkörpers (4) positionierbare Führungseinrichtung (55, 56) aufweist, welche das Einbringen der Windungen (2a) in die entsprechende Nut (43) erleichtert.

7. Vorrichtung nach Anspruch 6,
**dadurch gekennzeichnet,**
**dass** die Führungseinrichtung zwei im Bereich der zu befüllenden Nut (43), insbesondere seitlich der zu befüllenden Nut (43), zu positionierende Führungsbleche (55, 56) umfasst.

8. Vorrichtung nach einem der vorigen Ansprüche,
**dadurch gekennzeichnet,**
**dass** sie eine Positionierungseinrichtung (51) aufweist, die dazu ausgelegt ist, die Einbringeinrichtung über einer zu befüllenden Nut (43) des Rotor- oder Statorkörpers (4) zu positionieren.

9. Vorrichtung nach einem der vorigen Ansprüche,
**dadurch gekennzeichnet,**
**dass** sie weiter eine Deckschiebereinbringeinrichtung aufweist, die dazu ausgelegt ist, eine mit Windungen befüllte Nut (43) mit einem Deckschieber in axialer Richtung der Nut (43) zu schließen.

10. Vorrichtung nach einem der vorigen Ansprüche,
**dadurch gekennzeichnet,**
**dass** die Nuttiefenrichtung (R) die Radialrichtung des Rotor- oder Statorkörpers (4) ist.

11. Vorrichtung nach einem der vorigen Ansprüche,
**dadurch gekennzeichnet,**
**dass** der Rotor- oder Statorkörper (4) als Rotor- oder
Statorblechpaket, insbesondere als Statorblechpaket ausgebildet ist.

12. Verfahren zum Herstellen eines Stators durch Einbringen von Windungen (2a) einer Wellenwicklungsmatte (2) in die Nuten (43) eines Rotor- oder Statorkörpers (4), unter Verwendung einer Vorrichtung nach einem der vorigen Ansprüche, wobei das Verfahren folgende Schritte aufweist:
Bereitstellen eines Rotor- oder Statorkörpers (4) mit auf dessen Innen- oder Außenseite als Vertiefungen ausgebildeten Nuten (43, 43'), mit einer Nuttiefenrichtung (R) und einer Nutlängsrichtung (X);
Heranführen einer Wellenwicklungsmatte (2) zur mit Nuten (43) versehenden Seite des Rotor- oder Statorkörpers (4);
sukzessives Einbringen von Windungen, indem
a. eine Windung (2a) oder eine Mehrzahl Windungen (2a) vereinzelt werden und
b. anschließend die Windung (2a) oder die Mehrzahl Windungen (2a) in eine Nut (43) über eine Einbringeinrichtung (50) eingebracht werden,
c. nach Einbringen der Windung(en) (2a) in eine Nut (43) eine Relativdrehung zwischen Rotor- oder Statorkörper (4) und Einbringeinrichtung (50) erfolgt
d. die Schritte a., b. und c. wiederholt ausgeführt werden.

13. Verfahren nach Anspruch 12,
**dadurch gekennzeichnet,**
**dass** die mit Windungen (2a) befüllten Nuten (43) abschließend mit Deckschiebern verschlossen werden.

14. Verfahren nach Anspruch 12 oder 13,
**dadurch gekennzeichnet,**
**dass** als Rotor- oder Statorkörper (4) ein Rotor- oder Statorblechpaket, insbesondere ein Statorblechpaket verwendet wird.

## Claims

1. Device for introducing a winding mat (2) comprising wire wave windings into a rotor or stator body (4), comprising a receiving means (5) for receiving and holding the rotor or stator body (4) in a fastening position, and a feeding means (1) which feeds the winding mat (2) to the receiving means (5), the receiving means (5) further comprising an introducing means (50) which is configured to introduce windings (2a) of the winding mat (2) into grooves (43) in the rotor or stator body (4) in a groove depth direction (R) in relation to the rotor or stator body (4), **characterized in that** the introducing means (50) is further configured to separate the windings (2a) of the winding mat (2) prior to the introduction into grooves (43) and **in that** a relative rotation takes place between the rotor or stator body (4) and the introducing means (50).

2. Device according to claim 1, **characterized in that** the receiving means (5) is configured to be rotatable such that it can rotate the rotor or stator body (4) in a direction of rotation (P1) about the longitudinal axis of the rotor or stator body (4).

3. Device according to claim 2, **characterized in that** the receiving means (5) comprises a servomotor for rotating the rotor or stator body (4).

4. Device according to any of the preceding claims, **characterized in that** the introducing means (50) comprises a separating means (53) which can be advanced in relation to the laminated stator core (4) in a sliding direction (S) which extends in particular at an angle different from 0° to the groove depth direction (R).

5. Device according to any of the preceding claims, **characterized in that** the introducing means (50) comprises a groove depth slide (52), in particular a radial slide, which can be advanced with respect to the rotor or stator body (4) in the groove depth direction (R) and is configured to slide the separated windings (2a) into a groove (43) in the rotor or stator body (4) by advancing said windings in the groove depth direction (R).

6. Device according to any of the preceding claims, **characterized in that** the introducing means (50) has a guide means (55, 56) which can be positioned over the lateral edges (42) of the groove (43) in the rotor or stator body (4) to be filled with windings and which facilitates the introduction of the windings (2a) into the corresponding groove (43).

7. Device according to claim 6, **characterized in that** the guide means comprises two guide plates (55, 56) to be positioned in the region of the groove (43) to be filled, in particular laterally with respect to the groove (43) to be filled.

8. Device according to any of the preceding claims, **characterized in that** it comprises a positioning means (51) which is configured to position the introducing means over a groove (43) in the rotor or stator body (4) to be filled.

9. Device according to any of the preceding claims, **characterized in that** it further comprises a cover slide introducing means which is configured to close a groove (43) filled with windings by means of a cover slide in the axial direction of the groove (43).

10. Device according to any of the preceding claims, **characterized in that** the groove depth direction (R) is the radial direction of the rotor or stator body (4).

11. Device according to any of the preceding claims, **characterized in that** the rotor or stator body (4) is configured as a laminated rotor or stator core, in particular as a laminated stator core.

12. Method for producing a stator by introducing windings (2a) of a wave winding mat (2) into the grooves (43) in a rotor or stator body (4), using a device according to any of the preceding claims, wherein the method comprises the following steps:
providing a rotor or stator body (4) with grooves (43, 43') formed as depressions on its inside or outside, with a groove depth direction (R) and a groove length direction (X);
bringing a wave winding mat (2) up to the side of the rotor or stator body (4) provided with grooves (43);
successively introducing windings by
a. one winding (2a) or a plurality of windings (2a) being separated and
b. then the winding (2a) or the plurality of windings (2a) being introduced into a groove (43) via an introducing means (50),
c. after the winding(s) (2a) has/have been introduced into a groove (43), a relative rotation takes place between the rotor or stator body (4) and the introducing means (50)
d. steps a., b. and c. are carried out repeatedly.

13. Method according to claim 12, **characterized in that** the grooves (43) filled with windings (2a) are finally closed with cover slides.

14. Method according to claim 12 or 13, **characterized in that** a laminated rotor or stator core, in particular a laminated stator core, is used as the rotor or stator body (4).

## Revendications

1. Dispositif destiné à introduire un tapis d'enroulement (2) présentant des enroulements ondulés de fil dans un corps de rotor ou de stator (4), présentant un système de réception (5) destiné à recevoir et à maintenir le corps de rotor ou de stator (4) dans une situation de fixation, et un système d'alimentation (1) qui alimente le tapis d'enroulement (2) vers le système de réception (5), le système de réception (5) présentant également un système d'introduction (50) qui est conçu pour introduire des spires (2a) du tapis d'enroulement (2) dans des encoches (43) du corps de rotor ou de stator (4) par rapport au corps de rotor ou de stator (4) dans une direction de profondeur (R) des encoches, **caractérisé en ce que** le système d'introduction (50) est en outre conçu pour séparer les spires (2a) du tapis d'enroulement (2) avant leur introduction dans des encoches (43), et **en ce qu'**une rotation relative est effectuée entre le corps de rotor ou de stator (4) et le système d'introduction (50).

2. Dispositif selon la revendication 1,
**caractérisé en ce que** le système de réception (5) est conçu de façon rotative de sorte à pouvoir faire tourner le corps de rotor ou de stator (4) dans une direction de rotation (P1) autour de l'axe longitudinal du corps de rotor ou de stator (4).

3. Dispositif selon la revendication 2,
**caractérisé en ce que** le système de réception (5) comporte un servomoteur destiné à la rotation du corps de rotor ou de stator (4).

4. Dispositif selon l'une des revendications précédentes,
**caractérisé en ce que** le système d'introduction (50) comporte un système de séparation (53) qui peut être avancé vers l'empilage de tôles de stator (4) dans une direction de coulissement (S) s'étendant en particulier selon un angle différent de 0° par rapport à la direction de profondeur (R) des encoches.

5. Dispositif selon l'une des revendications précédentes,
**caractérisé en ce que** le système d'introduction (50) présente un coulisseau de profondeur d'encoches (52), en particulier un coulisseau radial, qui peut être avancé vers le corps de rotor ou de stator (4) dans la direction de profondeur (R) des encoches et qui est conçu pour faire coulisser les spires séparées (2a) dans une encoche (43) du corps de rotor ou de stator (4) par le déplacement dans la direction de profondeur (R) des encoches.

6. Dispositif selon l'une des revendications précédentes,
**caractérisé en ce que** le système d'introduction (50) présente un système de guidage (55, 56) pouvant être positionné au-dessus des bords latéraux (42) de l'encoche (43) du corps de rotor ou de stator (4) à remplir de spires, ce qui facilite l'introduction des spires (2a) dans l'encoche correspondante (43).

7. Dispositif selon la revendication 6,
**caractérisé en ce que** le système de guidage comprend deux tôles de guidage (55, 56) à positionner dans la zone de l'encoche (43) à remplir, en particulier latéralement par rapport à l'encoche (43) à remplir.

8. Dispositif selon l'une des revendications précédentes,
**caractérisé en ce qu'**il présente un système de positionnement (51) qui est conçu pour positionner le système d'introduction au-dessus d'une encoche (43) à remplir dans le corps de rotor ou de stator (4).

9. Dispositif selon l'une des revendications précédentes,
**caractérisé en ce qu'**il présente en outre un système d'introduction de coulisseau de recouvrement qui est conçu pour fermer une encoche (43) remplie de spires au moyen d'un coulisseau de recouvrement dans la direction axiale de l'encoche (43).

10. Dispositif selon l'une des revendications précédentes,
**caractérisé en ce que** la direction de profondeur (R) des encoches est la direction radiale du corps de rotor ou de stator (4).

11. Dispositif selon l'une des revendications précédentes,
**caractérisé en ce que** le corps de rotor ou de stator (4) est réalisé sous forme d'un empilage de tôles de rotor ou de stator, en particulier d'un empilage de tôles de stator.

12. Procédé de fabrication d'un stator par introduction de spires (2a) d'un tapis d'enroulement ondulé (2) dans les encoches (43) d'un corps de rotor ou de stator (4) à l'aide d'un dispositif selon l'une des revendications précédentes, le procédé présentant les étapes suivantes :
mise à disposition d'un corps de rotor ou de stator (4) comportant des encoches (43, 43') réalisées sous forme de dépressions sur son côté intérieur ou extérieur, comportant une direction de profondeur (R) des encoches et une direction de longueur (X) des encoches ;
amenée d'un tapis d'enroulement ondulé (2) vers le côté du corps de rotor ou de stator (4) qui est pourvu d'encoches (43) ;
introduction successive de spires
a. en séparant une spire (2a) ou une pluralité de spires (2a), et
b. en introduisant ensuite la spire (2a) ou la pluralité de spires (2a) dans une encoche (43) par l'intermédiaire d'un système d'introduction (50),
c. en effectuant une rotation relative entre le corps de rotor ou de stator (4) et le système d'introduction (50) après l'introduction de la spire (2a) ou des spires (2a) dans une encoche (43),
d. en exécutant les étapes a., b. et c. à plusieurs reprises.

13. Procédé selon la revendication 12,
**caractérisé en ce que** les encoches (43) remplies de spires (2a) sont enfin fermées par des coulisseaux de recouvrement.

14. Procédé selon la revendication 12 ou 13,
**caractérisé en ce qu'**un empilage de tôles de rotor ou de stator, en particulier un empilage de tôles de stator, est utilisé comme corps de rotor ou de stator (4).
